# EUROPÄISCHE PATENTSCHRIFT

(11) **EP 2 277 746 B1**
(45) Veröffentlichungstag und Bekanntmachung des Hinweises auf die Patenterteilung: **16.05.2012**
(21) Anmeldenummer: 09009530.8
(22) Anmeldetag: 23.07.2009
(51) Int. Cl.: B60R 21/38

(54) **Kraftfahrzeug mit einer Fronthaube**
Motor vehicle with a bonnet
Véhicule automobile doté d'un capot avant

(43) Veröffentlichungstag der Anmeldung: 26.01.2011
(73) Patentinhaber: Kirchhoff GmbH & Co. KG., 58553 Halver (DE)
(72) Erfinder: Dürhagen, Volker, 42855 Remscheid (DE)
(74) Vertreter: Köchling, Conrad-Joachim

(56) Entgegenhaltungen:
- EP-A- 1 880 907
- DE-A1- 10 352 275
- DE-A1-102004 004 987
- DE-A1-102006 015 209
- FR-A- 2 886 612

## Beschreibung

Die Erfindung betrifft ein Kraftfahrzeug mit einer Fronthaube, die an ihrem den A-Säulen des Fahrzeugs zugewandten Ende einen Scharnierbeschlag aufweist, mittels dessen die Fronthaube aus einer Schließlage in eine Öffnungslage aufschwenkbar ist, wobei der Scharnierbeschlag mindestens einen Stellhebel aufweist, der mit einem ersten Endbereich mittelbar oder unmittelbar an einem karosserieseitigen Auflager angelenkt ist und mit einem zweiten Endbereich an einem haubenseitigen Auflager angelenkt ist, der Stellhebel nahe des zweiten Endbereiches durch ein auftrennbares Verbindungsmittel fest mit dem haubenseitigen Auflager verbunden ist, zwischen dem karosserieseitigen Auflager und dem haubenseitigen Auflager ein Aktor angeordnet ist, mittels dessen das auftrennbare Verbindungsmittel auftrennbar ist und das haubenseitige Auflager um den zweiten Endbereich des Stellhebels in eine Personenschutzstellung schwenkbar ist, in der die daran befestigte Fronthaube im der A-Säule nahen Bereich angehoben ist, wobei ein Arretierungsmittel am Stellhebel vorgesehen ist, mittels dessen das aus der Personenschutzstellung in die Grundstellung zurückbewegte haubenseitige Auflager mit dem Stellhebel verriegelbar ist.

Bei solchen Einrichtungen ist es üblich, dass die Fronthaube in der Schließlage mit einem Fanghaken öder dergleichen Befestigungsteil, das am freien Ende der Fronthaube befestigt ist, an einem karosserieseitig angeordneten Schloss verhakbar ist. Bei solchen im Stand der Technik bekannten Ausbildungen, wie auch bei vorliegender Erfindung, ist die Fronthaube mittels paarweise angeordneter Scharnierbeschläge in die Schließlage zu verlagern, in der sie am freien Ende mit dem Fanghaken oder dergleichen Befestigungsteil in das karosserieseitig angeordnete Schloss eingreift. Bei geöffnetem Schloss kann die Haube in eine Öffnungsstellung verlagert werden. Die Scharniere sind außermittig rechts und links an dem Ende der Fronthaube angeordnet, welches der A-Säule zugewandt ist.

Im Stand der Technik sind auch Vorrichtungen zur Verlagerung der Fronthaube eines Kraftfahrzeuges bekannt, bei denen die Verlagerung der Fronthaube aus der Normalposition in eine Personenschutzstellung ermöglicht ist. Hierbei ist zur entsprechenden Verstellung der Haube eine Anordnung von Gelenkhebeln oder Viergelenkketten bekannt, wobei im Falle einer crashbedingten Auslösung ein Aufstellhebel, der mit einem Ende am Fahrzeugkörper angelenkt ist und dessen freies Ende auf eine Koppel der Viergelenkkette einwirkt, eine Aufschwenkbewegung der Haube bewirkt, in der diese in die Personenschutzstellung verlagert wird. Dabei wird das der A-Säule zugewandte Ende der Haube aus der normalen Schließlage in eine hochgestellte Lage verstellt. Diese Ausbildung dient zum Fußgängerschutz bei der Kollision des Fahrzeuges mit einem Fubgänger.

Im Falle des Aufpralles des Fahrzeuges auf einen Fußgänger wird die Haube mit ihrem der Windschutzscheibe nahe Ende hochgeschwenkt und mit ihrem in Fahrtrichtung vorn liegenden Ende am Schloss festgehalten, so dass die unfallbeteiligte Person möglichst weich aufgefangen werden kann.

Bei einem gattungsgemäßen Beschlag ist es bekannt, dass der Stellhebel nahe des zweiten Endbereiches durch ein auftrennbares Verbindungsmittel fest mit dem haubenseitigen Auflager verbunden ist. Dieses auftrennbare Verbindungsmittel kann beispielsweise durch einen Bolzen gebildet sein, der eine Sollbruchstelle aufweist und der die Verbindung freigibt, wenn der zwischen dem karosserieseitigen Auflager und dem haubenseitigen Auflager befindliche Aktor betätigt wird.

Der Aktor kann in unterschiedlicher Weise ausgestaltet sein. Es kann sich beispielsweise um einen vorgespannten Kraftspeicher, beispielsweise ein Federnpaket handeln, der bei in Normalgebrauchsposition befindlicher Fronthaube vorgespannt ist und der bei einer Crashsituation auslöst, um dann mittels des Kraftspeichers die Aufschwenkung der Haube in die Personenschutzstellung zu bewirken. Auch kann der Aktor ein pyrotechnischer Aktor sein. Auch hydraulische oder pneumatisch betätigbare Elemente können einen solchen Aktor bilden. Schließlich kann ein solcher Aktor auch durch ein oder mehrere Airbags gebildet sein.

Ferner ist es im Stand der Technik bekannt, am Stellhebel ein Arretierungsmittel vorzusehen, mittels dessen das aus der Personenschutzstellung in die Grundstellung zurückbewegte haubenseitige Auflager mit dem Stellhebel verriegelbar ist.

Sofern nämlich eine solche Schutzeinrichtung ausgelöst ist und die Haube in die Personenschutzstellung verstellt ist, indem das haubenseitige Auflager verstellt wird, so ist es erwünscht, dass die Haube in die Grundstellung zurückbewegt werden kann, in der sie nicht aufgestellt ist. Sofern sich die Haube in dieser Lage befindet, kann das Fahrzeug zur Reparatur in eine Werkstatt überführt werden. Dabei soll die Haube an ihrem der A-Säule bzw. der Windschutzscheibe benachbarten Ende auch verriegelt werden, damit sie sich nicht selbständig wieder in die Personenschutzstellung zurückbewegt. Im Stand der Technik ist hierzu ein Arretierungsmittel bekannt, welches aus einem Rasthebel besteht, der zum Zwecke der leichtgängigen Betätigung in eine Lagerbuchse drehbar gelagert ist und der mit einer Stellfeder kombiniert ist, die den Arretierungshebel in die Arretierungslage drängt. Die entsprechende Haltekontur, in die das Arretierungsmittel eingreift, ist an dem haubenseitigen Auflager vorgesehen. Bei der konstruktiven Lösung muss darauf geachtet werden, dass das Arretierungsmittel die im Crashfall durch den Aktor bedingte Aufstellbewegung der Haube nicht behindert, wobei andererseits sichergestellt sein soll, dass nach einem Crashfall die Haube in die Grundstellung zurückbewegt werden kann und in dieser Grundstellung verriegelt gehalten werden kann, indem das Arretierungsmittel in die entsprechende Arretierungskontur des haubenseitigen Auflagers eingreift.

Zum Stand der Technik wird beispielsweise auf die DE 10 2006 015 209 A1 sowie die DE 103 52 275 A1 verwiesen.

Die angegebene Verriegelung der Haube durch das Arretierungsmittel ist aus der betrieblichen Praxis bekannt.

Dieses zusätzliche Arretierungsmittel einschließlich der zugehörigen Funktionsteile wie der Stellfeder und der Buchse, verursacht zusätzliche Kosten, die es zu vermeiden gilt, sowie zusätzliche Funktionsrisiken, die daraus entstehen, dass mehrere Teile funktionsgerecht zusammenwirken müssen, um die gewünschte Wirkung zu erreichen.

Ausgehend von diesem Stand der Technik liegt der Erfindung die Aufgabe zugrunde, eine gattungsgemäße Ausgestaltung zur Verfügung zu stellen, die besonders kostengünstig unter Verminderung der Einzelteile zur Verfügung gestellt werden kann und die eine hohe Funktionssicherheit gewährleistet.

Zur Lösung dieser Aufgabe wird vorgeschlagen, das das Arretierungsmittel eine Blattfeder ist, die mit einem ersten Endbereich unverlierbar am Stellhebel gehalten ist und deren zweiter, zum haubenseitigen Auflager gerichteter Endbereich abgewinkelt ist, wobei das haubenseitige Auflager eine Rastausnehmung aufweist, in welche die Blattfeder mit ihrem zweiten Endbereich rastend einsteckbar ist.

Durch diese Ausbildung stellt die Erfindung ein Arretierungsmittel zur Verfügung, welches äußerst kostengünstig ist. Anstelle der bisherigen Kombination eines Riegels mit einer Feder und mit einer Führungsbuchse ist lediglich eine Blattfeder erforderlich, so dass die Anzahl der erforderlichen Bauteile erheblich minimiert ist und insgesamt die Kosten minimiert sind. Anstelle der angegebenen Anordnung ist auch eine kinematisch umgekehrte Anordnung möglich, bei der die Blattfeder an dem haubenseitigen Auflager gehalten ist und eine Rastausnehmung am Stellhebel ausgebildet ist.

Für die bestimmungsgemäße Funktion ist es erforderlich, dass die Blattfeder im Normalzustand des Fahrzeuges, wenn also keine crashbedingte Verstellung der Fronthaube erfolgt ist, nicht in Eingriff mit der Rastausnehmung ist, sondern unverrastet positioniert ist, damit im Falle einer Crashbelastung die Verstellung des haubenseitigen Auflagers relativ zum Stellhebel ermöglicht ist, um die Haube in die Fußgängerschutzposition zu überführen. Ist die Haube einmal in die Fußgängerschutzposition überführt, weil eine crashbedingte Belastung vorliegt, so ist die Anordnung so getroffen, dass die Blattfeder dann, wenn die Haube mit ihrem der Frontseite benachbarten Ende wieder in die Ausgangslage zurückgedrückt wird, die Blattfeder in die Rastausnehmung eingreift und in dieser verrastet.

Vorzugsweise ist dabei vorgesehen, dass die Rastausnehmung zwischen der Anlenkstelle des Stellhebels am haubenseitigen Auflager und dem auftrennbaren Verbindungsmittel angeordnet ist.

Um sicherzustellen, dass einerseits bei der normalen Funktion der Fronthaube die Blattfeder nicht in der Rastausnehmung sitzt und nicht verrasten kann und um andererseits sicherzustellen, dass nach einer crashbedingten Verstellung der Fronthaube die Blattfeder in einer Position ausgerichtet ist, in der sie in die Rastausnehmung eingeführt und in dieser verrastet werden kann, ist vorgesehen, dass neben der Rastausnehmung auf ihrer der Anlenkstelle des Stellhebels abgewandten Seite eine Führungsschräge ausgebildet ist, an der die Blattfeder mit ihrem der Abwinklung abgewandten Rücken bei nicht aufgetrenntem Verbindungsmittel vorgespannt anliegt.

Bei der Erstinstallation der Elemente wird die Rastfeder gebogen und vorgespannt, indem sie entlang der Führungsschräge geführt wird, die neben der Rastausnehmung liegt. Die Blattfeder ist damit. nicht verrastet, aber in ihrer Normalposition vorgespannt gehalten. Sofern die Haube dann in die Personenschutzposition überführt wird, gleitet die Blattfeder aus der Führungsschräge heraus und entspannt sich, so dass sie dann beim Zurückführen der Haube in die Normalstellung in die Rastausnehmung eingreift und in dieser verrasten kann.

Vorzugsweise ist vorgesehen, dass der abgewinkelte Endbereich der Blattfeder einen V-förmigen Haken bildet.

Eine besonders bevorzugte Ausbildung wird darin gesehen, dass die Rastausnehmung V-förmig ausgebildet ist und an ihrem mit dem freien Ende des V-förmigen Hakens der Blattfeder zusammenwirkenden Einschubbereich einen Führungsvorsprung aufweist, an dem der Rücken des freien Endes des Hakens geführt ist, wobei sich die Rastausnehmung im Anschluss an den Führungsvorsprung zu einer V-Form erweitert, deren zwischen ihren Schenkeln eingeschlossener Winkel kleiner ist als der zwischen den Schenkeln des V-förmigen Hakens der Blattfeder bei ungespanntem Haken gebildete Winkel, so dass in der Rastlage bei vollständig in die Rastausnehmung eingesetztem Haken der Haken unter Federvorspannung in der Rastausnehmung sitzt, und wobei sich die freie Endkante des V-förmigen Hakens an der Rückseite des Führungsvorsprungs unlösbar verhakt.

Sofern nach einer crashbedingten Verstellung der Fronthaube in die Fußgängerschutzposition die Haube beispielsweise manuell wieder in die Grundstellung zurückgedrückt werden soll, so gleitet das freie Ende des V-förmigen Hakens der Blattfeder auf den Führungsvorsprung auf und der freie Schenkel des Hakens wird in Richtung auf den anderen Schenkel der Feder bewegt, wobei sich der andere Schenkel an einer entsprechenden Führungskontur der Rastausnehmung abstützt. Bei ausreichender Einschubtiefe des V-förmigen Hakens in die Rastausnehmung überläuft das freie Ende des Hakens den Führungsvorsprung und greift hinter diesen in die V-förmige Erweiterung, wobei diese so bemessen ist, dass der V-förmige Haken vorgespannt bleibt, die Schenkel also federnd zusammengedrückt sind. In der Rastlage, bei vollständig in die Rastausnehmung eingesetztem Haken sitzt der Haken unter Federvorspannung in der entsprechenden Rastausnehmung, wobei sich die freie Endkante des einen Schenkels des V-förmigen Hakens an der Rückseite des Führüngsvorsprungs unlösbar verhakt, so dass sich diese Verrastung nicht selbständig lösen kann.

Zudem ist vorgesehen, dass die Rastausnehmung nahe des Führungsvorsprungs eine Ausnehmung zum Einsatz der Klinge eines Schraubendrehers aufweist.

Durch diese Ausbildung ist es möglich, dass beispielsweise in einer Werkstatt die Verrastung gelöst werden kann, indem ein Monteur mit der Klinge eines Schraubendrehers in die Ausnehmung eingreift, und den freien Schenkel des V-förmigen Hakens in Richtung auf den anderen Schenkel bewegt, so dass der Haken durch entsprechende Bewegung der Haube aus der Rastausnehmung herausgleiten kann.

Vorzugsweise ist ferner vorgesehen, dass die Blattfeder am ersten Endbereich eine über einen Steg verbundene U-förmige Aufnahmerinne aufweist, die mit ihren Schenkeln auf die dem haubenseitigen Auflager abgewandte Randkante des Stellhebels aufgesteckt ist.

Durch diese Ausbildung ist eine einfache Montage der Blattfeder an dem Stellhebel realisierbar. Vorzugsweise ist dabei vorgesehen, dass die Schenkel mit dem Stellhebel verbunden sind.

Besonders bevorzugt ist dabei vorgesehen, dass der Stellhebel im Bereich, der von den Schenkeln übergriffen ist, eine Lochung aufweist und die Schenkel in die Lochung verformt oder verprägt sind.

Hierdurch wird ein sicherer Sitz der Blattfeder an dem Stellhebel erreicht.

Um sicherzustellen, dass sich die Blattfeder nicht relativ zum Stellhebel um den Befestigungsbereich drehen kann, ist vorgesehen, dass an die Basis der U-förmigen Aufnahmerinne ein Federsteg angeformt ist, der sich an der von der U-förmigen Rinne übergriffenen Randkante des Stellhebels federnd abstützt.

Eine alternative bevorzugte Lösung wird darin gesehen, dass die Blattfeder in der Grundstellung bei nicht aufgetrenntem Verbindungsmittel in die Rastausnehmung eingreift, aber nicht verrastet ist, und die Blattfeder bei aufgetrenntem Verbindungsmittel in die Rastausnehmung tiefer eingreift und in dieser verrastet ist wenn das haubenseitige Auflager aus der Personenschutzstellung in die Grundstellung zurückbewegt ist.

Gemäß dieser Ausbildung befindet sich die Blattfeder in der Originalgrundstellung, wenn also das Verbindungsmittel nicht aufgetrennt ist, schon in der Rastausnehmung, ist aber in dieser nicht verrastet, weil beispielsweise das rastende Ende der Blattfeder noch nicht hinter die Rastausnehmung greift, sondern lediglich in dieser sitzt. Durch das aüftrennbare-Verbindungsmittel wird verhindert, dass die Blattfeder tiefer in die Rastausnehmung eintaucht, um in dieser zu verrasten. Erst dann, wenn die Personenschutzstellung eingestellt wird, also der Aktor betätigt und das auftrennbare Verbindungsmittel getrennt wird, wird zunächst die Haube mit dem haubenseitigen Auflager aufgeschwenkt, in die Personenschutzstellung, wobei dann, wenn die Haube wieder in die Grundstellung zurückgeführt werden soll, die Blattfeder wiederum in die Rastausnehmung eingreift, dann aber tiefer in die Rastausnehmung eingebracht werden kann, weil das auftrennbare Verbindungsmittel dieses tiefere Eindringen in die Rastausnehmung nicht mehr verhindert, weil es in diesem Zustand aufgetrennt ist. Die-Blattfeder verrastet in diesem Zustand in der Rastausnehmung und sichert die Haube in der zurückgeführten Grundstellung.

Weitere Besonderheiten und Einzelheiten ergeben sich aus den nachstehenden Zeichnungen.

Es zeigt:
- Figur 1: einen erfindungsgemäßen Scharnierbeschlag in der Normalstellung, die der geschlossenen Fronthaube entspricht, in isometrischer Darstellung;
- Figur 2: eine Einzelheit der Figur 1 in vergrößerter Darstellung;
- Figur 3: ein Scharnierbeschlag in einer Position, die der Fußgängerschutzposition der Fahrzeughaube entspricht;
- Figur 4 bis 6: Positionen, die sich beim Zurückstellen der Fronthaube aus der Fußgängerschutzposition in die Normalposition ergeben;
- Figur 7: die Position der erfindungsgemäßen Blattfeder, bei der Stellung gemäß Figur 1 und 2;
- Figur 8: die Position der Blattfeder analog der Darstellung gemäß Figur 5;
- Figur 9: die Position der Blattfeder in einer Zwischenlage zwischen Figur 5 und Figur 6 gesehen;
- Figur 10: die Position der Blattfeder in der Ausführungslage gemäß Figur 6 gesehen.

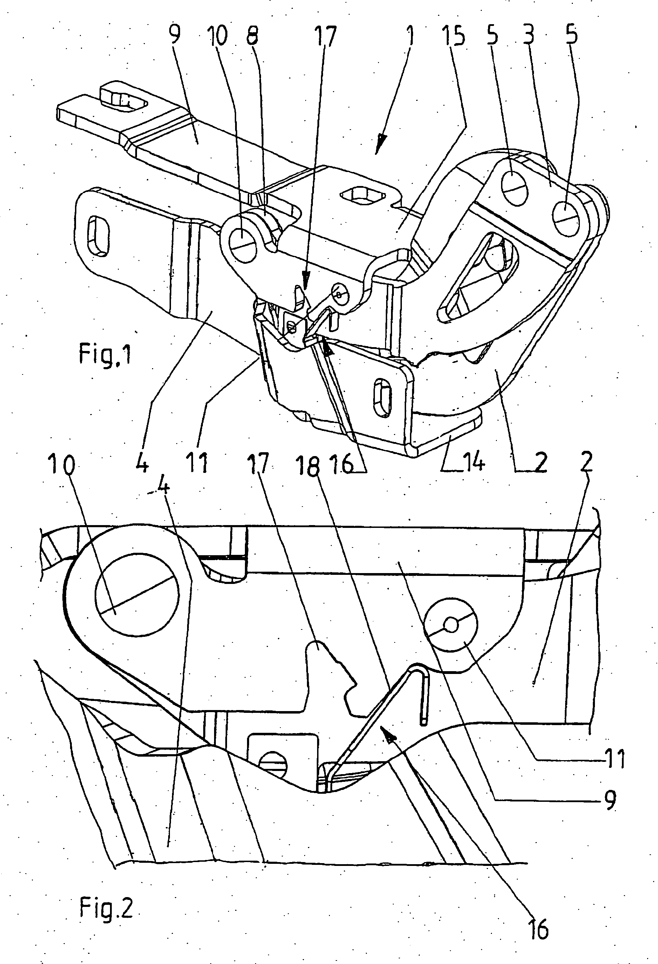

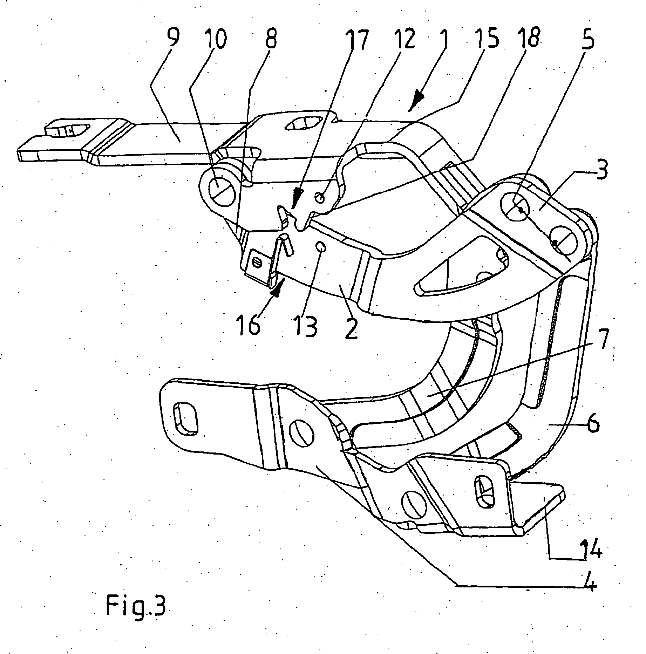

In der Zeichnung, insbesondere in Figur 1, ist ein Scharnierbeschlag 1 gezeigt; mittels dessen die Fronthaube eines Kraftfahrzeuges aus einer Schließlage in eine Öffnungslage aufschwenkbar ist. Der Scharnierbeschlag 1 weist mindestens einen Stellhebel 2 auf, der mit einem ersten Endbereich 3 mittelbar an einem karosserieseitigen Auflager 4 angelenkt ist (Anlenkstellen 5). Im Ausführungsbeispiel ist der Stellhebel 2 nicht unmittelbar an dem karosserieseitigen Auflager 4 angelenkt, sondern über dazwischen angeordnete Lenkerhebel 6, 7 mit dem karosserieseitigen Auflager 4 verbunden. Das karosserieseitige Auflager 4 wird in geeigneter Weise an der Karosserie befestigt. Mit seinem zweiten Endbereich 8 ist der Stellhebel 2 an einem haubenseitigen Auflager 9 angelenkt (Anlenkstelle 10). Zusätzlich ist der Stellhebel 2 nahe seines zweiten Endbereiches 8 durch ein auftrennbares Verbindungsmittel 11 fest mit dem haubenseitigen Auflager 9 verbunden. Das auftrennbare Verbindungsmittel 11 ist im Ausführungsbeispiel durch einen Bolzen gebildet, der durch entsprechende Lochungen 12, 13 des haubenseitigen Auflagers 9 und des Stellhebels 2 gesteckt ist und der eine Sollbruchstelle aufweist, so dass bei einer entsprechenden Belastung der Bolzen bricht und die Verbindung in diesen Bereich aufgetrennt wird. An geeigneter Stelle ist zwischen dem karosserieseitigen Auflager 4 und dem haubenseitigen Auflager 9 ein Aktor angeordnet. Beispielsweise kann der Aktor zwischen den Beschlagteilen 14 und 15 eingespannt sein. Im Falle eines Crashes eines mit dieser Anordnung ausgerüsteten Fahrzeuges wird der Aktor aktiviert und mittels des Aktors wird das auftrennbare Verbindungsmittel 11 durchtrennt, so dass dann das haubenseitige Auflager 9 um den zweiten Gelenkbereich 10 des Stellhebels 2 in eine Personenschutzstellung schwenkbar ist, in der die daran befestigte Fronthaube in der A-Säule des Fahrzeuges benachbarten Bereich angehoben wird. Diese Position ist in Figur 3 gezeigt. Am Stellhebel 2 ist zusätzlich ein Arretierungsmittel angeordnet, mittels dessen das aus der Personenschutzstellung gemäß Figur 3 in die Grundstellung analog Figur 1 zurückbewegte haubenseitige Auflager 9 mit dem Stellhebel 2 verriegelt ist.

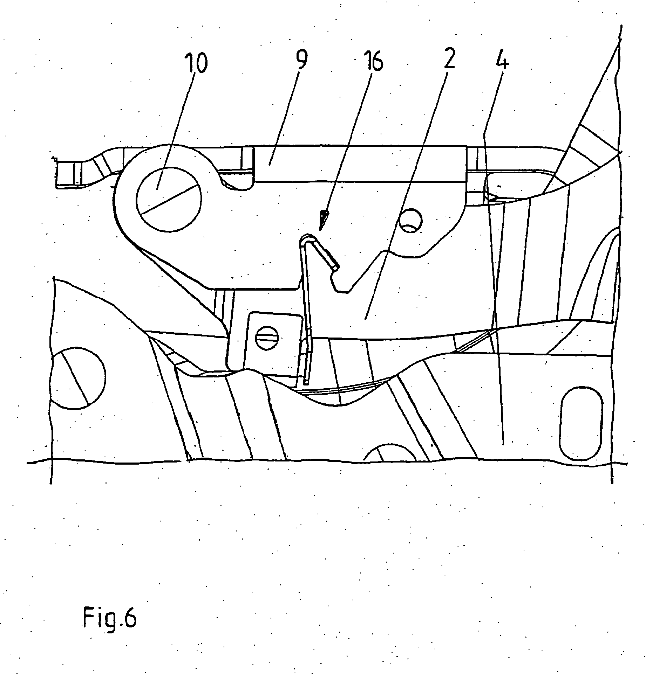

Das Arretiermittel ist eine Blattfeder 16, die mit einem ersten Endbereich unverlierbar am Stellhebel 2 gehalten oder befestigt ist und deren zweiter, zum haubenseitigen Auflager 9 gerichteter Endbereich abgewinkelt ist, wobei das haubenseitige Auflager eine Rastausnehmung 17 aufweist, in welche die Blattfeder 16 mit ihrem zweiten Endbereich rastend einsteckbar ist, wenn das haubenseitige Auflager 9 aus der Personenschutzstellung gemäß Figur 3 in die Grundstellung zurückgeführt ist, wie in Figur 6 veranschaulicht ist.

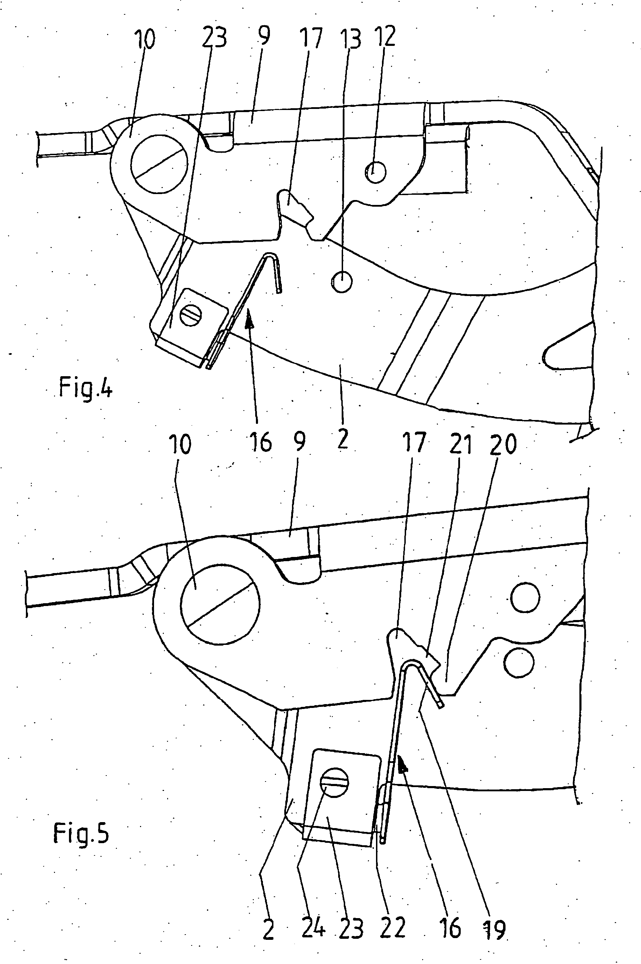

Die Rastausnehmung 17 ist räumlich zwischen der Anlenkstelle 10 des Stellhebels 2 am haubenseitigen Auflager 9 und dem auftrennbaren Verbindungsmittel 11 angeordnet. Konkret ist diese Rastausnehmung 17 an einer Abwinklung des haubenseitigen Auflagers 9 angeordnet und nach unten offen, so dass die Blattfeder 16 in der entsprechenden Lage in diese Rastausnehmung 17 eingeführt werden und eingreifen kann. Wie besonders gut in Figur 2 ersichtlich, ist neben der Rastausnehmung 17 auf ihrer der Anlenkstelle 10 des Stellhebels 2 abgewandten Seite eine Führungsschräge 18 ausgebildet, an der die Blattfeder 16 mit ihrem ihrer Abwinklung abgewandten Rücken bei nicht aufgetrennten Verbindungsmittel 11 vorgespannt anliegt, wie in Figur 1 und 2 verdeutlicht ist. Insbesondere bildet der abgewinkelte Endbereich der Blattfeder 16 einen V-förmigen Haken. Beim Zusammenführen der entsprechenden Elemente wird bei der Erstmontage darauf geachtet, dass die Blattfeder 16 mit ihrem Rücken auf die Führungsschräge 18 aufgleitet und federnd vorgespannt in der Position gehalten ist, wie in Figur 1 und 2 gezeigt ist. Sofern durch den entsprechenden Aktor das haubenseitige Auflager in die Position gemäß Figur 3 verstellt wird, so gleitet der Rücken der Blattfeder 16 wiederum an der Führungsschräge 18 ab, bis er unterhalb mit Abstand von der Ausnehmung 17 angeordnet ist, wie in Figur 3 verdeutlicht ist. Die Blattfeder 16 nimmt dabei eine Position ein, die unterhalb der Rastausnehmung 17 angeordnet ist, wie ebenfalls aus Figur 3 ersichtlich, weil die Blattfeder 16 sich aus der vorgespannten Position gemäß Figur 1 und 2 in die entspannte Position gemäß Figur 3 bewegt. Sofern nach einem Crashfall die entsprechende Haube des Fahrzeuges aus der Personenschutzposition in eine etwa der Grundstellung entsprechende Position zurückgeführt werden soll, so wird die Blattfeder 16 mit ihrer V-förmigen Abwinklung in die ebenfalls etwa V-förmige Rastausnehmung 17 eingeführt, wie in Figur 5 verdeutlicht ist, wobei die Rastausnehmung an ihrem mit dem freien Ende 19 des V-förmigen Hakens der Blattfeder 16 zusammenwirkenden Einschubbereich einen Führungsvorsprung 20 aufweist, an dem der Rücken des freien Endes 19 des Hakens geführt ist. Mit zunehmender Einschubtiefe der Blattfeder 16 in die Rastausnehmung 17 wird das freie Ende 19 in Richtung auf den anderen Schenkel bewegt und somit federnd vorgespannt gehalten. Die Rastausnehmung 17 erweitert sich im Anschluss an den Führungsvorsprung 20 zu einer V-Form, wobei deren zwischen ihren Schenkeln eingeschlossener Winkel kleiner ist, als der zwischen den Schenkeln des V-förmigen Hakens der Blattfeder 16 bei ungespanntem Haken gebildete Winkel, so dass in der Rastlage bei vollständig in die Rastausnehmung eingesetztem Haken dieser Haken unter Federvorspannung in der Rastausnehmung 17 sitzt, wie in Figur 6 veranschaulicht ist. Dabei ist die freie Endkante des V-förmigen Hakens der Blattfeder 16 an der Rückseite des Führungsvorsprunges 20 unlösbar verhakt, wie ebenfalls in Figur 6 verdeutlicht ist. Zusätzlich weist die Rastausnehmung 17 nahe des Führungsvorsprunges 20 eine Ausnehmung 21 auf, die zum Einsatz der Klinge eines Schraubendrehers dient, um die Blattfeder 16 aus der Verhakungsposition gemäß Figur 6 zu lösen.

Die Blattfeder 16 weist an ihrem Endbereich eine über einen Steg 22 verbundene U-förmige Aufnahmerinne 23 auf, die mit ihren Schenkeln auf die mit dem haubenseitigen Auflager 9 abgewandte Randkante des Stellhebels 2 aufgesteckt ist. Dabei sind die Schenkel der U-förmigen Aufnahmerinne 23 mit den Seitenflächen des Stellhebels 2 verbunden. Vorzugsweise weist der Stellhebel 2 in diesem Bereich eine Lochung auf, während die Schenkel der U-förmigen Aufnahmerinne Verprägungen 24 oder dergleichen aufweisen, die in die entsprechende Lochung des Stellhebels 2 eingreifen und für sicheren Sitz sorgen. Zusätzlich ist an die Basis der U-förmigen Aufnahmerinne 23 ein Federsteg 25 und/oder 26 angeformt, der sich an der von der U-förmigen Rinne 23 übergriffenen Randkante des Stellhebels 2 federnd abstützt, so dass einer möglichen Drehbewegung der Aufnahmerinne 23 um den Befestigungspunkt am Stellhebel 2 entgegengewirkt wird.

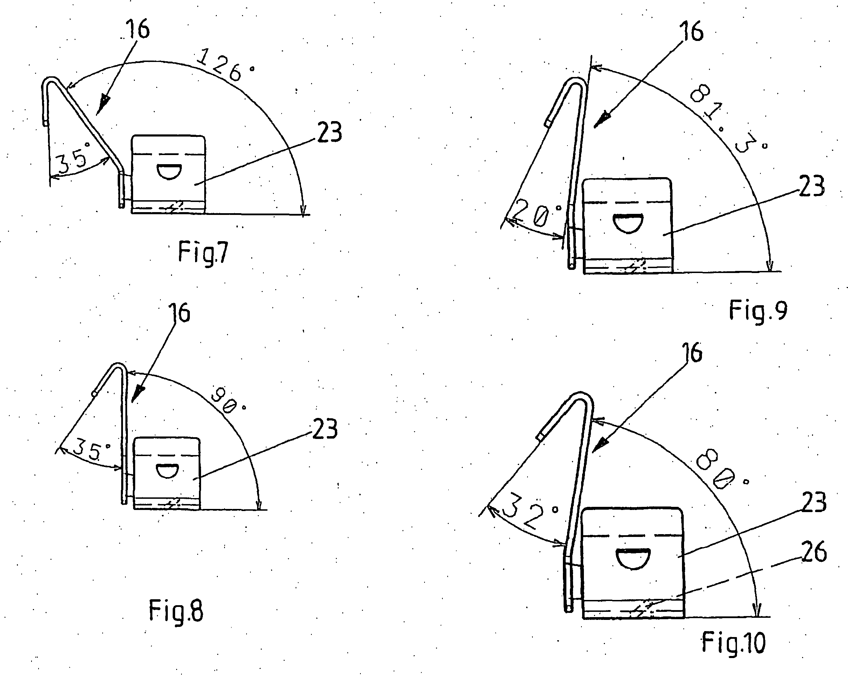

In den Figuren 7 bis 10 ist die jeweilige Position der Blattfeder 16 retativ zu der U-förmigen Rinne 23 veranschaulicht.

In Figur 7 ist die Position gemäß Figur 1 und 2 gezeigt, bei der die Blattfeder 16 gegenüber der Rinne 23 nach links gebogen ist, so dass sie in der Führungsschräge 18 des haubenseitigen Auflagers 9 liegt.

In Figur 8 ist die Position analog Figur 3 gezeigt, bei der die Blattfeder 16 entspannt ist. In Figur 9 ist eine Position der Blattfeder gezeigt, die einer Lage zwischen der Position gemäß den Figuren 5 und 6 entspricht. Hierbei ist sowohl die Blattfeder 16 mit ihrem Rücken zu der Rinne 23 hin federnd vorgespannt, als auch der Haken der Blattfeder 16 federnd vorgespannt zusammengedrückt.

In Figur 10 ist die Endposition analog Figur 6 gezeigt. Hierbei ist die Blattfeder 16 weiterhin zur Rinne 23 hin federnd verlagert, wobei sich die Schenkel des Hakens der Blattfeder 16 aufgeweitet haben, aber noch nicht die entspannte Lage einnehmen, die in Figur 8 gezeigt ist, so dass in der Darstellung gemäß Figur 6 die Blattfeder vorgespannt in der entsprechenden Rastausnehmung sitzt.

Die zur Verfügung gestellte technische Lösung ist äußerst einfach zu gestalten, da es lediglich der Anordnung der Rastausnehmung 17 mit der daneben befindlichen Führungsschräge 18 sowie der hakenförmigen Blattfeder 16 bedarf, um die funktionstüchtige Anordnung zur Verfügung zu stellen.

Eine Variante der Erfindung, die in der Zeichnung nicht dargestellt ist, wird aber nachstehend anhand des Ausführungsbeispieles erläutert. Bei dieser Variante befindet sich die Blattfeder 16 in der Grundstellung, wie in Figur 1 gezeigt ist, in der Rastausnehmung 17, wobei aber das freie Ende 19 der Blattfeder 16 nur so weit in die Rastausnehmung- 17 eingreift, dass keine Verriegelung des Endes der Blattfeder 16 hinter dem Vorsprung 20 erfolgt. Die Feder ist dann ähnlich platziert, wie in Figur 5 bei dem anderen Ausführungsbeispiel verdeutlicht ist. Sofern der Aktor ausgelöst und die Haube des Fahrzeuges in die Personenschutzstellung überführt wird, schwenkt das haubenseitige Auflager 9 nach oben eine Position, wie sie beispielsweise in Figur 3 oder Figur 4 gezeigt ist. Wenn dann die Haube mit dem haubenseitigen Auflager 9 wieder in die Grundstellung zurückgeführt wird, die in Figur 6 gezeigt ist, gleitet die Blattfeder 16 in die Rastausnehmung 17 ein. Wegen des in diesem Zustand aufgetrennten Verbindungsmittels 11 kann das haubenseitige Auflager 9 und damit die Haube tiefer in die Schließlage gedrückt werden, als im Originalzustand, so dass dann das Ende 19 der Blattfeder 16 hinter den Führungsvorsprung 20 greift, wenn sie vollständig in die Rastausnehmung 17 eingebracht ist. In diesem Zustand ist eine Verriegelung der Teile miteinander erreicht.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Kraftfahrzeug mit einer Fronthaube, die an ihrem den A-Säulen des Fahrzeugs zugewandten Ende einen Scharnierbeschlag (1) aufweist, mittels dessen die-Fronthaube aus einer Schließlage in eine Öffnungslage aufschwenkbar ist, wobei der Scharnierbeschlag (1) mindestens einen Stellhebel (2) aufweist, der mit einem ersten Endbereich (8) mittelbar oder unmittelbar an einem karosserieseitigen Auflager (4) angelenkt ist und mit einem zweiten Endbereich (3) an einem haubenseitigen Auflager (9) angelenkt ist, der Stellhebel (2) nahe des zweiten Endbereiches (8) durch ein auftrennbares Verbindungsmittel (11) fest mit dem haubenseitigen Auflager (9) verbunden ist, zwischen dem karosserieseitigen Auflager (4) und dem haubenseitigen Auflager (9) ein Aktor angeordnet ist, mittels dessen das auftrennbare Verbindungsmittel (11) auftrennbar ist und das haubenseitige Auflager (9) um den zweiten Endbereich (8) des Stellhebels (2) in eine Personenschutzstellung schwenkbar ist, in der die daran befestigte Fronthaube im der A-Säule nahen Bereich angehoben ist, wobei ein Arretierungsmittel am Stellhebel (2) vorgesehen ist, mittels dessen das aus der Personenschutzstellung in die Grundstellung zurückbewegte haubenseitige Auflager (9) mit dem Stellhebel (2) verriegelbar ist,
**dadurch gekennzeichnet, dass** das Arretierungsmittel eine Blattfeder (16) ist, die mit einem ersten Endbereich unverlierbar am Stellhebel (2) gehalten ist und deren zweiter, zum haubenseitigen Auflager (9) gerichteter Endbereich abgewinkelt ist, wobei das haubenseitige Auflager (9) eine Rastausnehmung (17) aufweist, in welche die Blattfeder (16) mit ihrem zweiten Endbereich rastend einsteckbar ist.

2. Kraftfahrzeuge nach Anspruch 1,
**dadurch gekennzeichnet, dass** die Rastausnehmung (17) zwischen der Anlenkstelle (10) des Stellhebels (2) am haubenseitigen Auflager (9) und dem auftrennbaren Verbindungsmittel (11) angeordnet ist.

3. Kraftfahrzeug nach Anspruch 1 oder 2,
**dadurch gekennzeichnet, dass** neben der Rastausnehmung (17) auf ihrer der Anlenkstelle (10) des Stellhebels (2) abgewandten Seite eine Führungsschräge (18) ausgebildet ist, an der die Blattfeder (16) mit ihrem der Abwinklung abgewandten Rücken bei nicht aufgetrenntem Verbindungsmittel (11) vorgespannt anliegt.

4. Kraftfahrzeuge nach einem der Ansprüche 1 bis 3,
**dadurch gekennzeichnet, dass** der abgewinkelte Endbereich der Blattfeder (16) einen V-förmigen Haken bildet.

5. Kraftfahrzeug nach Anspruch 4,
**dadurch gekennzeichnet, dass** die Rastausnehmung (17) V-förmig ausgebildet ist und an ihrem mit dem freien Ende des V-förmigen Hakens der Blattfeder (16) zusammenwirkenden Einschubbereich einen Führungsvorsprung (20) aufweist, an dem der Rücken des freien Endes des Hakens geführt ist, wobei sich die Rastausnehmung (17) im Anschluss an den Führungsvorsprung (20) zu einer V-Form erweitert, deren zwischen ihren. Schenkeln eingeschlossener Winkel kleiner ist als der zwischen den Schenkeln des V-förmigen Hakens der Blattfeder (16) bei ungespanntem Haken gebildete Winkel, so dass in der Rastlage bei vollständig in die Rastausnehmung (17) eingesetztem Haken der Haken unter Federvorspannung in der Rastausnehmung (17) sitzt, und wobei sich die freie Endkante des V-förmigen Hakens an der Rückseite des Führungsvorsprungs (20) unlösbar verhakt.

6. Kraftfahrzeug nach Anspruch 5,
**dadurch gekennzeichnet, dass** die Rastausnehmung (17) nahe des Führungsvorsprungs (20) eine Ausnehmung (21) zum Einsatz der Klinge eines Schraubendrehers aufweist.

7. Kraftfahrzeug nach einem der Ansprüche 1 bis 6,
**dadurch gekennzeichnet, dass** die Blattfeder (16) am ersten Endbereich eine über einen Steg (22) verbundene U-förmige Aufnahmerinne (23) aufweist, die mit ihren Schenkeln auf die dem haubenseitigen Auflager (9) abgewandte Randkante des Stellhebels (2) aufgesteckt ist.

8. Kraftfahrzeug nach Anspruch 7,
**dadurch gekennzeichnet, dass** die Schenkel mit dem Stellhebel (2) verbunden sind.

9. Kraftfahrzeug nach Anspruch 8,
**dadurch gekennzeichnet, dass** der Stellhebel (2) im Bereich, der von den Schenkeln übergriffen ist, eine Lochung aufweist und die Schenkel in die Lochung verformt oder verprägt sind.

10. Kraftfahrzeug nach einem der Ansprüche 7 bis 9,
**dadurch gekennzeichnet, dass** an die Basis der U-förmigen Aufnahmerinne (23) ein Federsteg (25,26) angeformt ist, der sich an der von der U-förmigen Rinne übergriffenen Randkante des Stellhebels (2) federnd abstützt.

11. Kraftfahrzeug nach einem der Ansprüche 1 bis 10,
**dadurch gekennzeichnet, dass** die Blattfeder (16) in der Grundstellung bei nicht aufgetrenntem Verbindungsmittel (11) in die Rastausnehmung (17) eingreift, aber nicht verrastet ist, und die Blattfeder (16) bei aufgetrenntem Verbindungsmittel (11) in die Rastausnehmung (17) tiefer eingreift und in dieser verrastet ist , wenn das haubenseitige Auflager (9) aus der Personenschutzstellung in die Grundstellung zurückbewegt ist.

## Claims

1. A motor vehicle with a bonnet comprising at its end facing toward the A-columns of the vehicle a hinge fitting (1), by means of which the bonnet can be pivoted from a closed position into an open position, the hinge fitting (1) comprising at least one adjusting lever (2) that is jointed with a first end region (8) mediately or immediately at a support (4) located on the body and with a second end region (3) at a support (9) located on the bonnet, the adjusting lever (2) being firmly connected close to the second end region (8) by a separable connection means (11) to the support (9) located on the bonnet, between the support (4) located on the body and the support (9) located on the bonnet an actor being arranged, by means of which the separable connection means (11) can be separated and the support (9) located on the bonnet can be pivoted about the second end region (8) of the adjusting lever (2) into a personal protection position, in which the attached bonnet is raised in the region close to the A-column, a locking means being provided at the adjusting lever (2), by means of which the support (9) located on the bonnet moved back from the personal protection position into the basic position can be locked with the adjusting lever (2), **characterized in that** the locking means is a blade spring (16), which is captively held with a first end region at the adjusting lever (2), and the second end region of which being directed to the support (9) located on the bonnet is bent, the support (9) located on the bonnet comprising a catch recess (17), into which the blade spring (16) with its second end region can be inserted in a latching manner.

2. The motor vehicle according to claim 1, **characterized in that** the catch recess (17) is disposed between the articulation point (10) of the adjusting lever (2) at the support (9) located on the bonnet and the separable connection means (11).

3. The motor vehicle according to claim 1 or 2, **characterized in that** beside the catch recess (17) on its side facing away from the articulation point (10) of the adjusting lever (2), a guide slope (18) is formed, at which the blade spring (16) is supported in a pre-tensioned manner with its back facing away from the bend when the connection means (11) is not separated.

4. The motor vehicle according to one of claims 1 to 3, **characterized in that** the bent end region of the blade spring (16) forms a V-shaped hook.

5. The motor vehicle according to claim 4, **characterized in that** the catch recess (17) is V-shaped and comprises at its insertion region interacting with the free end of the V-shaped hook of the blade spring (16) a guide projection (20), at which the back of the free end of the hook is guided, behind the guide projection (20) the catch recess (17) widening to a V-shape, the angle formed between its limbs of which is smaller than the angle formed between the limbs of the V-shaped hook of the blade spring (16) when the hook is not tensioned, such that in the latched position with the hook being fully inserted in the catch recess (17), the hook sits under spring tension in the catch recess (17), and the free end edge of the V-shaped hook is undetachably hooked at the rear side of the guide projection (20).

6. The motor vehicle according to claim 5, **characterized in that** the catch recess (17) comprises close to the guide projection (20) a recess (21) for receiving the blade of a screw driver.

7. The motor vehicle according to one of claims 1 to 6, **characterized in that** the blade spring (16) comprises at the first end region a U-shaped receiving channel (23) connected by a web (22), said receiving channel (23) being attached with its limbs on the peripheral edge of the adjusting lever (2) facing away from the support (9) located on the bonnet.

8. The motor vehicle according to claim 7, **characterized in that** the limbs are connected with the adjusting lever (2).

9. The motor vehicle according to claim 8, **characterized in that** the adjusting lever (2) comprises in the region, over which the limbs engage, a perforation, and the limbs are deformed or stamped in the perforation.

10. The motor vehicle according to one of claims 7 to 9, **characterized in that** at the base of the U-shaped receiving channel (23), a spring web (25, 26) is formed that is resiliently supported at the peripheral edge of the adjusting lever (2), over which the U-shaped channel engages.

11. The motor vehicle according to one of claims 1 to 10, **characterized in that** in the basic position when the connection means (11) is not separated, the blade spring (16) engages in the catch recess (17), but is not locked therein, and when the connection means (11) is separated, the blade spring (16) engages deeper in the catch recess (17) and is locked therein, when the support (9) located on the bonnet is moved back from the personal protection position into the basic position.

## Revendications

1. Véhicule automobile doté d'un capot avant, qui comprend à son extrémité orientée vers les colonnes A du véhicule une ferrure de charnière (1), au moyen de laquelle le capot avant peut être ouvert vers le haut à partir d'une position de fermeture en une position d'ouverture, la ferrure de charnière (1) comprenant au moins un levier de réglage (2), qui s'articule avec une première région d'extrémité (8) médiatement ou immédiatement à un support (4) situé côté carrosserie et s'articule avec une deuxième région d'extrémité (3) à un support (9) situé côté capot, le levier de réglage (2) étant solidement relié près de la deuxième région d'extrémité (8) par un moyen de liage (11) séparable au support (9) situé côté capot, entre le support (4) situé côté carrosserie et le support (9) situé côté capot un acteur étant prévu, au moyen duquel le moyen de liage (11) séparable peut être séparé et le support (9) situé côté capot peut être pivoté autour de la deuxième région d'extrémité (8) du levier de réglage (2) en une position de protection de personnes, dans laquelle le capot avant fixé à celui-ci est soulevé dans la région près de la colonne A, un moyen d'arrêt étant prévu au levier de réglage (2), au moyen duquel le support (9) situé côté capot déplacé à partir de la position de protection de personnes en la position de base peut être bloqué avec le levier de réglage (2), **caractérisé en ce que** le moyen d'arrêt est un ressort à lames (16), qui avec une première région d'extrémité est maintenu de manière imperdable au levier de réglage (2) et dont la deuxième région d'extrémité orientée vers le support (9) situé côté capot est coudée, le support (9) situé côté capot comprenant un évidement d'encliquetage (17), dans lequel le ressort à lames (16) est enfichable par encliquetage avec sa deuxième région d'extrémité.

2. Véhicule automobile selon la revendication 1, **caractérisé en ce que** l'évidement d'encliquetage (17) est disposé entre l'endroit d'articulation (10) du levier de réglage (2) au support (9) situé côté capot et le moyen de liage (11) séparable.

3. Véhicule automobile selon la revendication 1 ou 2, **caractérisé en ce qu'**à côté de l'évidement d'encliquetage (17) sur son côté orienté à l'opposé de l'endroit d'articulation (10) du levier de réglage (2), un biais de guidage (18) est formé, auquel le ressort à lames (16) repose de manière précontrainte avec son dos orienté à l'opposé de la partie pliée, si le moyen de liage (11) n'est pas séparé.

4. Véhicule automobile selon une des revendications 1 à 3, **caractérisé en ce que** la région d'extrémité coudée du ressort à lames (16) forme un crochet en V.

5. Véhicule automobile selon la revendication 4, **caractérisé en ce que** l'évidement d'encliquetage (17) est configuré en V et comprend à sa zone d'insertion coopérant avec l'extrémité libre du crochet en V du ressort à lames (16) une saillie de guidage (20), à laquelle le dos de l'extrémité libre du crochet est guidé, l'évidement d'encliquetage (17) s'élargeant derrière la saillie de guidage (20) à une forme en V, dont l'angle compris entre ses jambes est inférieur à celui entre les jambes du crochet en V du ressort à lames (16) si le crochet n'est pas tendu, de sorte que dans la position d'encliquetage, quand le crochet est complètement inséré dans l'évidement d'encliquetage (17), le crochet se trouve sous précontrainte de ressort dans l'évidement d'encliquetage (17), et dans lequel l'arête d'extrémité libre du crochet en V est accrochée de manière indémontable à la face arrière de la saillie de guidage (20).

6. Véhicule automobile selon la revendication 5, **caractérisé en ce que** l'évidement d'encliquetage (17) comprend près de la saillie de guidage (20) un évidement (21) pour l'insertion de la lame d'un tournevis.

7. Véhicule automobile selon une des revendications 1 à 6, **caractérisé en ce que** le ressort à lames (16) comprend à la première région d'extrémité une cavité de logement (23) en U liée par une entretoise (22), qui est placée avec ses jambes sur le bord périphérique du levier de réglage (2) orienté à l'opposé du support (9) situé côté capot.

8. Véhicule automobile selon la revendication 7, **caractérisé en ce que** les jambes sont liées au levier de réglage (2).

9. Véhicule automobile selon la revendication 8, **caractérisé en ce que** le levier de réglage (2) comprend dans la région, qui est engagée par le dessus par les jambes, un perçage, et les jambes sont déformées ou imprimées dans le perçage.

10. Véhicule automobile selon une des revendications 7 à 9, **caractérisé en ce qu'**à la base de la cavité de logement (23) en U, une barrette de ressort (25, 26) est formée, qui est soutenue élastiquement au bord périphérique du levier de réglage (2) engagé par le dessus par la cavité en U.

11. Véhicule automobile selon une des revendications 1 à 10, **caractérisé en ce que** dans la position de base, quand le moyen de liage (11) n'est pas séparé, le ressort à lames (16) s'engage dans l'évidement d'encliquetage (17), mais n'est pas encliqueté là-dedans, et quand le moyen de liage (11) est séparé, le ressort à lames (16) s'engage de manière plus profonde dans l'évidement d'encliquetage (17) et est encliqueté là-dedans, quand le support (9) situé côté capot est amené en retour à partir de la position de protection de personnes dans la position de base.
